# FASCICULE DE BREVET EUROPEEN

(11) **EP 0 989 317 B1**
(45) Date de publication et mention de la délivrance du brevet: **07.05.2003**
(21) Numéro de dépôt: 98203178.3
(22) Date de dépôt: 22.09.1998
(51) Int. Cl.: F16D 1/12

(54) **Système pour assurer le réglage de la course angulaire d'un arbre**
System zur Einstellung des Drehwinkels einer Welle
System for adjusting the limits of the angle rotated by an axle

(43) Date de publication de la demande: 29.03.2000
(73) Titulaire: Techspace aero, 4041 Milmort - Herstal (BE)
(72) Inventeur: Leclercq, Stéphane, 4671 Housse (BE)
(74) Mandataire: Berrou, Paul

(56) Documents cités:
- DE-A- 3 804 655
- GB-A- 191 212 287

## Description

L'invention concerne un système pour assurer le réglage de la course angulaire d'un arbre monté rotatif autour de son axe X sur un support.

Dans de nombreux mécanismes, il est nécessaire de limiter la course angulaire d'un arbre de commande entre deux positions extrêmes et de pouvoir régler ces positions. Il en est ainsi, par exemple, dans les vannes et organes de régulation ou de réglage de débit de fluides.

Le document GB-A-12,287 décrit un système pour assurer le réglage de la course d'un arbre monté autour de son axe sur un support. Le système comporte deux vis de réglage agissant sur des butées rotatives sur l'arbre, chaque vis comportant une partie filetée coopérant avec un taraudage d'un carter.

Le but de l'invention est de proposer un système destiné à assurer le réglage de la course angulaire de l'arbre de manière très précise, et qui soit robuste et facile à réaliser.

L'invention atteint son but par le fait que le système comporte :
une butée rotative solidaire de l'arbre et s'étendant perpendiculairement à l'axe X, ladite butée logeant dans une chambre cylindrique d'axe X ménagée dans un carter solidaire dudit support, et
deux vis de réglage portées par ledit carter et destinées chacune à limiter la course angulaire dudit arbre dans l'un des sens de rotation autour de l'axe X,
chaque vis de réglage comportant une partie filetée coopérant avec un taraudage du carter et un corps cylindrique dans le prolongement de la partie filetée, ayant un diamètre supérieur au diamètre de la partie filetée, et susceptible de coulisser sans jeu, par suite de la rotation de ladite vis de réglage, dans un alésage correspondant ménagé dans le carter dans le prolongement du taraudage,
ledit alésage ayant un axe Y excentré par rapport à l'axe X et perpendiculaire à ce dernier et débouchant sensiblement tangentiellement à la périphérie de ladite chambre cylindrique,
la face d'extrémité du corps cylindrique étant disposée, au moins en partie, dans la chambre cylindrique pour servir d'appui à la butée rotative, afin de limiter le déplacement de la butée rotative dans l'un des sens de rotation de l'arbre.

Grâce au guidage précis et sans jeu du corps cylindrique de la vis dans l'alésage du carter, le système permet d'obtenir une grande précision des positions extrêmes de l'arbre pour des courses angulaires importantes, même lorsque le mécanisme est soumis à des efforts importants.

De préférence, la face d'extrémité du corps cylindrique présente une surface sphérique de révolution autour de l'axe Y et de rayon Rs, et la surface de la butée rotative susceptible d'être en appui sur ladite face d'extrémité est une portion de surface d'un cylindre de rayon Rc dont les génératrices sont parallèles à l'axe X. Le rapport Rs/Rc est, de préférence, voisin de 1.

Avantageusement, l'alésage déborde à la périphérie de la chambre cylindrique, afin d'assurer l'appui du corps cylindrique contre la paroi externe de l'alésage dans toutes les positions.

De préférence, il est prévu un épaulement entre le taraudage et l'alésage, et la face d'extrémité du corps cylindrique émerge, au moins en partie, dans la chambre cylindrique lorsque le corps cylindrique est en appui sur ledit épaulement. Ceci peut constituer une limite de sécurité ou une limite de référence pour des modifications de réglage.

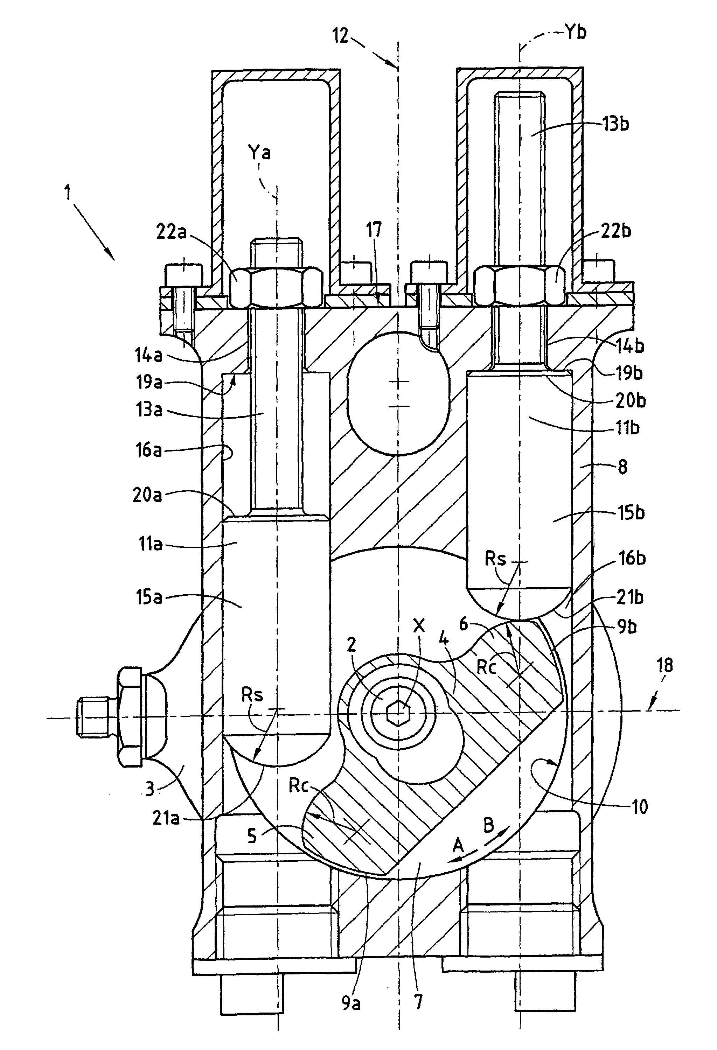

D'autres avantages et caractéristiques de l'invention ressortiront à la lecture de la description suivante faite à titre d'exemple et en référence au dessin annexé dans lequel :
la figure unique représente en coupe, selon un plan perpendiculaire à l'axe de rotation de l'arbre, un système de réglage de la course angulaire d'un arbre selon la présente invention.

Sur le dessin on a représenté par la référence 1 un dispositif de réglage de la course angulaire d'un arbre 2 d'axe X monté rotatif sur un support 3, qui peut être, par exemple, le corps d'une vanne de réglage de débit dont le débit est réglé par la position angulaire de l'arbre 2 autour de l'axe X.

Le rôle du dispositif de réglage 1 est de limiter la rotation de l'arbre 2 dans le sens des aiguilles d'une montre A et dans le sens inverse B.

A cet effet, l'extrémité de l'arbre 2 est équipée d'une plaque de butée 4 solidaire de l'arbre 2 et comportant deux oreilles 5, 6 qui s'étendent radialement vers l'extérieur.

La plaque 4 loge dans une chambre cylindrique 7 d'axe X ménagée dans un carter 8 solidaire du support 3. Le diamètre de la chambre cylindrique 7 est tel que les faces d'extrémité 9a et 9b des oreilles 5 et 6 frôlent la paroi interne cylindrique 10 délimitant la chambre cylindrique 7.

Les références 11a, 11b désignent deux vis de réglage semblables, disposées symétriquement par rapport à un plan 12 radial passant par l'axe X de l'arbre 2 et dont les axes Ya, Yb sont perpendiculaires à l'axe de rotation X de l'arbre 2 et traversent la chambre cylindrique 7 au voisinage de la paroi interne cylindrique 10.

Les vis de réglage 11a, 11b comportent chacune une partie filetée, respectivement 13a, 13b, qui coopère avec un taraudage 14a, 14b ménagé dans le carter et un corps cylindrique 15a, 15b logeant dans un alésage 16a, 16b également ménagé dans le carter 8. Les taraudages 14a, 14b débouchent sur une face externe 17 du carter 8, et les alésages 16a, 16b, situés à l'intérieur du carter 8 et dans le prolongement des taraudages 14a, 14b, débouchent sensiblement tangentiellement à la périphérie 10 de la chambre cylindrique 7.

De préférence, les alésages 16a, 16b se prolongent à travers la chambre cylindrique 7 et débordent latéralement à la périphérie de cette chambre 7 au niveau du plan radial 18 perpendiculaire au plan 12 et passant par l'axe X.

Les taraudages 14a, 14b et les alésages 16a, 16b situés respectivement dans les prolongements les uns des autres ont leurs axes de révolution confondus avec les axes Ya, Yb des deux vis de réglage 11a, 11b. Un épaulement 19a est prévu entre le taraudage 14a et l'alésage 16a contre lequel la face supérieure 20a du corps cylindrique 15a peut venir en appui. Entre le taraudage 14b et l'alésage 16b est également prévu un épaulement 19b pour l'appui de la face supérieure 20b du corps cylindrique 15b. Ces épaulements 19a, 19b permettent de limiter le déplacement des vis de réglage 11a, 11b vers le haut.

Lorsque le corps cylindrique 15a, 15b d'une vis de réglage est en appui contre l'épaulement 19a, 19b, la face d'extrémité 21a, 21b du corps cylindrique correspondant se trouve, au moins en partie, dans la chambre cylindrique 7, et sert de butée à une oreille 5, 6.

Ces faces d'extrémité 21a, 21b sont des surfaces convexes et de préférence sphériques de rayon Rs.

Les surfaces 22a, 22b des oreilles 5, 6, qui sont susceptibles d'être en appui sur les faces d'extrémité 21a, 21b, sont également convexes et de préférence cylindriques de rayon Rc avec des génératrices parallèles à l'axe X.

Le rapport Rs/Rc détermine le point de contact entre la vis de réglage 11a, 11b et la plaque de butée 4 et donc l'orientation de la force résultante qui agit sur les vis. Ce rapport est de préférence voisin de 1.

Les parties filetées 13a, 13b émergent sur la face supérieure 17 du carter 8. Les références 22a, 22b désignent des écrous coopérant avec les filetages des parties filetées 13a, 13b pour immobiliser ces dernières en rotation autour des axes Ya, Yb.

Les diamètres des corps cylindriques 15a, 15b sont sensiblement égaux aux diamètres des alésages 16a, 16b, afin de permettre le déplacement des vis de réglage 11, 11b parallèlement à leurs axes Ya, Yb par rotation tout en assurant la rigidité du système lorsque la plaque de butée 4 est en appui sur l'une ou l'autre des vis 11a, 11b. Du fait que les alésages 16a, 16b débordent légèrement à la périphérie de la chambre cylindrique 7, la vis de réglage est en appui sur le carter 8 au niveau de la face extérieure, même lorsqu'elle est fortement rentrée dans la chambre cylindrique 7, et ses déformations en flexion sont très limitées, ce qui garantit une bonne précision vis-à-vis de la position angulaire visée.

Lorsqu'une des vis n'est pas rentrée dans la chambre cylindrique 7, la vis 11b du dessin, par exemple, elle est en appui sur le carter 8, au niveau du côté intérieur de l'alésage 16b et ses déformations en flexion sont également très limitées.

Les caractéristiques géométriques des différentes pièces sont à déterminer suivant les dimensions du mécanisme concerné. On tient notamment compte de la course angulaire, de la plage de réglage et de l'encombrement.

La course maximum peut être limitée par le choix de la longueur des vis 11a, 11b qui viendront en appui sur les épaulements 19a, 19b. Ceci peut constituer une limite de sécurité ou une limite de référence pour des modifications de réglage.

Le système de butées proposé permet d'obtenir une grande précision pour des courses angulaires importantes, même lorsque le mécanisme est soumis à des efforts importants. En effet, les déformations des pièces sont très limitées.

Dans le mode de réalisation décrit en détail ci-dessus, les deux vis 11a, 11b sont orientées dans la même direction, ce qui limite l'encombrement et facilite l'accès par un opérateur.

L'usinage des pièces est simple, vu leur forme sphérique ou cylindrique.

On peut obtenir une relation presque linéaire entre le déplacement de la vis et la rotation maximale possible de la plaque de butée 4.

Le système offre également la possibilité de confiner les pièces dans une enceinte fermée, à l'intérieur du carter 8 et donc à l'abri des pollutions extérieures.

## Revendications

1. Système pour assurer le réglage de la course angulaire d'un arbre (2) monté rotatif autour de son axe X sur un support (3), comportant:
une butée rotative (4, 5, 6) solidaire de l'arbre et s'étendant perpendiculairement à l'axe X, ladite butée logeant dans une chambre cylindrique (7) d'axe X ménagée dans un carter (8) solidaire dudit support (3), et
deux vis de réglage (11a, 11b) portées par ledit carter (8) et destinées chacune à limiter la course angulaire dudit arbre (2) dans l'un des sens de rotation autour de l'axe X,
chaque vis de réglage (11a, 11b) comportant une partie filetée (13a, 13b) coopérant avec un taraudage (14a, 14b) du carter (8) et un corps cylindrique (15a, 15b) dans le prolongement de la partie filetée, ayant un diamètre supérieur au diamètre de la partie filetée, et susceptible de coulisser sans jeu, par suite de la rotation de ladite vis de réglage, dans un alésage correspondant (16a, 16b) ménagé dans le carter (8) dans le prolongement du taraudage (14a, 14b),
ledit alésage (16a, 16b) ayant un axe Y excentré par rapport à l'axe X et perpendiculaire à ce dernier et débouchant sensiblement tangentiellement à la périphérie (10) de ladite chambre cylindrique (7),
la face d'extrémité (21a, 21b) du corps cylindrique (15a, 15b) étant disposée, au moins en partie, dans la chambre cylindrique (7) pour servir d'appui à la butée rotative (4, 5, 6), afin de limiter le déplacement de la butée rotative dans l'un des sens de rotation de l'arbre.

2. Système selon la revendication 1, **caractérisé par le fait que** la face d'extrémité (21a, 21b) du corps cylindrique (15a, 15b) est convexe et de révolution autour de l'axe Y.

3. Système selon l'une quelconque des revendications 1 ou 2, **caractérisé par le fait que** la face d'extrémité (21a, 21b) du corps cylindrique (15a, 15b) présente une surface sphérique de révolution autour de l'axe Y et de rayon Rs, et **par le fait que** la surface (22a, 22b) de la butée rotative (4, 5, 6) susceptible d'être en appui sur ladite face d'extrémité (21a, 21b) est une portion de surface d'un cylindre de rayon Rc dont les génératrices sont parallèles à l'axe X.

4. Système selon la revendication 3, **caractérisé par le fait que** le rapport Rs/Rc est voisin de 1.

5. Système selon l'une quelconque des revendications 1 à 4, **caractérisé par le fait que** l'alésage (16a, 16b) déborde à la périphérie (10) de la chambre cylindrique (7).

6. Système selon l'une quelconque des revendications 1 à 5, **caractérisé par le fait qu'**il est prévu un épaulement (19a, 19b) entre le taraudage (14a, 14b) et l'alésage (16a, 16b), et **par le fait que** la face d'extrémité (21a, 21b) du corps cylindrique (15a, 15b) émerge, au moins en partie, dans la chambre cylindrique (7) lorsque le corps cylindrique (15a, 15b) est en appui sur ledit épaulement (19a, 19b).

7. Système selon l'une quelconque des revendications 1 à 6, **caractérisé par le fait qu'**il est prévu des moyens (22a, 22b) pour immobiliser en rotation la vis de réglage (11a, 11b).

8. Système selon la revendication 7, **caractérisé par le fait que** les moyens pour immobiliser en rotation la vis de réglage (11a, 11b) comportent un écrou (22a, 22b) coopérant avec la partie filetée (13a, 13b) de ladite vis de réglage (11a, 11b).

## Claims

1. System for adjusting the angular travel of a shaft (2) mounted so that it can rotate about its axis X on a support (3), comprising:
a rotary stop (4, 5, 6) secured to the shaft and
extending at right angles to the axis X, the said stop being housed in a cylindrical chamber (7) of axis X formed in a casing (8) secured to the said support (3), and
two adjusting screws (11a, 11b) borne by the said casing (8) and each intended to limit the angular travel of the said shaft (2) in one of the directions of rotation about the axis X,
each adjusting screw (11a, 11b) comprising a threaded part (13a, 13b) collaborating with a tapping (14a, 14b) of the casing (8) and a cylindrical body (15a, 15b) in the continuation of the threaded part with a diameter greater than the diameter of the threaded part and able to slide without clearance, as a result of the said adjusting screw being turned, in a corresponding bore (16a, 16b) made in the casing (8) in the continuation of the tapping (14a, 14b),
the said bore (16a, 16b) having an axis Y which is off-centred with respect to the axis X and perpendicular to the latter and opens more or less at a tangent to the periphery (10) of the said cylindrical chamber (7),
the end face (21a, 21b) of the cylindrical body (15a, 15b) being arranged, at least partly, in the cylindrical chamber (7) to act as a support for the rotary stop (4, 5, 6) so as to limit the movement of the rotary stop in one of the directions of rotation of the shaft.

2. System according to Claim 1, **characterized in that** the end face (21a, 21b) of the cylindrical body (15a, 15b) is convex and axisymmetric about the axis Y.

3. System according to either one of Claims 1 and 2, **characterized in that** the end face (21a, 21b) of the cylindrical body (15a, 15b) has a spherical surface which is axisymmetric about the axis Y and of radius Rs, and **in that** the surface (22a, 22b) of the rotary stop (4, 5, 6) able to press against the said end face (21a, 21b) is a portion of a surface of a cylinder of radius Rc, the generatrices of which are parallel to the axis X.

4. System according to Claim 3, **characterized in that** the ratio Rs/Rc is close to 1.

5. System according to any one of Claims 1 to 4, **characterized in that** the bore (16a, 16b) overhangs the periphery (10) of the cylindrical chamber (7).

6. System according to any one of Claims 1 to 5, **characterized in that** there is a shoulder (19a, 19b) between the tapping (14a, 14b) and the bore (16a, 16b), and **in that** the end face (21a, 21b) of the cylindrical body (15a, 15b) emerges, at least partly, into the cylindrical chamber (7) when the cylindrical body (15a, 15b) is resting against the said shoulder (19a, 19b).

7. System according to any one of Claims 1 to 6, **characterized in that** there are means (22a, 22b) for preventing the adjusting screw (11a, lib) from turning.

8. System according to Claim 7, **characterized in that** the means for preventing the adjusting screw (11a, 11b) from turning comprise a nut (22a, 22b) collaborating with the threaded part (13a, 13b) of the said adjusting screw (11a, 11b).

## Patentansprüche

1. System zur Einstellung des Drehwinkels einer Welle (2), die um ihre Achse X drehbar auf einem Lager (3) angebracht ist, bestehend aus:
- einem drehbaren Anschlag (4, 5, 6), der fest mit der Welle verbunden ist und sich im rechten Winkel zur Achse X erstreckt, wobei dieser Anschlag in einer zylinderförmigen Kammer (7) mit der Achse X Aufnahme findet, die in einem mit dem genannten Lager (3) fest verbundenen Gehäuse (8) ausgeführt ist, und
- zwei Einstellschrauben (11a, 11b), die an diesem Gehäuse (8) sitzen und jeweils dazu vorgesehen sind, den Drehwinkel dieser Welle (2) in einer der Drehrichtungen um die Achse X herum zu begrenzen,
wobei jede Einstellschraube (11a, 11b) einen mit einer Gewindebohrung (14a, 14b) des Gehäuses (8) zusammenwirkenden Gewindeabschnitt (13a, 13b) und in der Verlängerung des Gewindeabschnitts einen zylinderförmigen Körper (15a, 15b) aufweist, dessen Durchmesser größer ist als der Durchmesser des Gewindeabschnitts und der beim Drehen dieser Einstellschraube ohne Spiel in einer entsprechenden Bohrung (16a, 16b) gleiten kann, die in dem Gehäuse (8) in der Verlängerung der Gewindebohrung (14a, 14b) ausgeführt ist,
wobei diese Bohrung (16a, 16b) eine Achse Y hat, die gegenüber der Achse X außermittig und im rechten Winkel zu dieser angeordnet ist und im wesentlichen tangential an dem Außenumfang (10) der genannten zylinderförmigen Kammer (7) mündet,
wobei die Endseite (21a, 21b) des zylinderförmigen Körpers (15a, 15b) wenigstens teilweise in der zylinderförmigen Kammer (7) angeordnet ist, um als Anlage für den drehbaren Anschlag (4, 5, 6) zu dienen, so dass die Bewegung des drehbaren Anschlags in einer der Drehrichtungen der Welle begrenzt wird.

2. Einstellungssystem nach Anspruch 1,
**dadurch gekennzeichnet,**
**dass** die Endseite (21a, 21b) des zylinderförmigen Körpers (15a, 15b) konvex und um die Achse Y umlaufend geformt ist.

3. Einstellungssystem nach einem der Ansprüche 1 oder 2,
**dadurch gekennzeichnet,**
**dass** die Endseite (21a, 21b) des zylinderförmigen Körpers (15a, 15b) eine kugelförmig um die Achse Y umlaufende Oberfläche mit dem Radius Rs aufweist, und dass die Fläche (22a, 22b) des drehbaren Anschlags (4, 5, 6), die an dieser Endseite (21a, 21b) in Anlage kommen kann, ein Oberflächenabschnitt eines Zylinders mit Radius Rc ist, dessen Mantellinien parallel zur Achse X verlaufen.

4. Einstellungssystem nach Anspruch 3,
**dadurch gekennzeichnet,**
**dass** das Verhältnis Rs/Rc im Bereich von 1 liegt.

5. Einstellungssystem nach einem der Ansprüche 1 bis 4,
**dadurch gekennzeichnet,**
**dass** die Bohrung (16a, 16b) über die Umfangslinie (10) der zylinderförmigen Kammer (7) hinaus geht.

6. Einstellungssystem nach einem der Ansprüche 1 bis 5,
**dadurch gekennzeichnet,**
**dass** zwischen der Gewindebohrung (14a, 14b) und der Bohrung (16a, 16b) ein Absatz (19a, 19b) vorgesehen ist, und dass die Endseite (21a, 21b) des zylinderförmigen Körpers (15a, 15b), zumindest teilweise, in die zylinderförmige Kammer (7) hinein ragt, wenn der zylinderförmige Körper (15a, 15b) sich in Anlage an diesem Absatz (19a, 19b) befindet.

7. Einstellungssystem nach einem der Ansprüche 1 bis 6,
**dadurch gekennzeichnet,**
**dass** Mittel (22a, 22b) vorgesehen sind, um die Einstellschraube (11a, 11b) in ihrer Drehbewegung zu arretieren.

8. Einstellungssystem nach Anspruch 7,
**dadurch gekennzeichnet,**
**dass** die Mittel zur Arretierung der Einstellschraube (11a, 11b) aus einer Mutter (22a, 22b) bestehen, die mit dem Gewindeabschnitt (13a, 13b) dieser Einstellschraube (11a, 11b) zusammenwirken.
